# FASCICULE DE BREVET EUROPEEN

(11) **EP 2 842 114 B1**
(45) Date de publication et mention de la délivrance du brevet: **30.12.2020**
(21) Numéro de dépôt: 13719822.2
(22) Date de dépôt: 26.04.2013
(51) Int. Cl.: G08C 17/00, H04L 12/28

(54) **INSTALLATION CONTRÔLANT DE MANIÈRE AUTOMATIQUE DES CONDITIONS DE CONFORT ET/OU DE SÉCURITÉ DANS UN BÂTIMENT**
ANLAGE ZUR AUTOMATISCHEN STEUERUNG DER KOMFORT- UND/ODER SICHERHEITSBEDINGUNGEN IN EINEM GEBÄUDE
INSTALLATION AUTOMATICALLY CONTROLLING CONDITIONS OF COMFORT AND/OR OF SAFETY IN A BUILDING

(30) Priorité: 27.04.2012 FR 1253964
(43) Date de publication de la demande: 04.03.2015
(73) Titulaire: SOMFY ACTIVITES SA, 74300 Cluses (FR)
(72) Inventeur: ROUX, Morgan, F-74190 Passy (FR); NEUMAN, Serge, F-74600 Seynod (FR); BEAUJEU, Thierry, F-74970 Marignier (FR)
(74) Mandataire: Novaimo
(86) Numéro de dépôt international: PCT/EP2013/058788
(87) Numéro de publication internationale: WO 2013/160464

(56) Documents cités:
- EP-A2- 1 199 844
- WO-A2-03/096741
- US-A1- 2003 040 812
- US-A1- 2008 220 722
- US-A1- 2012 086 563

## Description

L'invention concerne le domaine des installations immotiques comprenant des équipements immotiques, comme des actionneurs électriques d'entraînement des éléments mobiles dans un bâtiment, tels que des fermetures ou protections solaires, ou de pilotage des équipements d'éclairage, chauffage et ventilation.

Ces installations immotiques permettent d'assurer la sécurité et/ou le confort lumineux dans le bâtiment. Elles permettent de réaliser des économies en énergie en régulant les flux énergétiques (apports thermiques et ventilation naturelle) à travers les ouvertures de la façade. Les éléments mobiles peuvent être des stores d'intérieur, par exemple des stores vénitiens à lames orientables, ou des stores enroulables, ou des écrans extérieurs, des panneaux rigides orientables, etc.

Au niveau de chaque élément mobile, des actionneurs pilotent le mouvement de ces éléments mobiles en rotation et/ou en translation. Les actionneurs sont gérés de manière centrale, par groupe, au niveau de la pièce, de l'étage, de la façade à laquelle ils appartiennent ou simplement au niveau du bâtiment. Cette gestion est effectuée de manière automatique par une ou plusieurs unités de commande, qui récupèrent également un certain nombre d'informations auprès de divers capteurs positionnés à l'intérieur et à l'extérieur du bâtiment (capteurs de présence, de température, de luminosité, etc.).

Chaque actionneur peut également être piloté normalement par un utilisateur, individuellement ou dans un groupe, par l'intermédiaire d'une unité de commande locale.
voir par exemple la publication US2003/0040812.

Cependant, il existe un besoin de contrôle automatique s'ajoutant à ou remplaçant le contrôle manuel, notamment actionneur par actionneur, ou par sous-groupe, pour tenir compte de conditions locales. Diverses solutions de gestion automatique des installations immotiques existent. Elles nécessitent généralement une procédure complexe pour la modification d'une configuration existante figée ou difficilement reprogrammable pour s'adapter à des besoins différents du dispositif de gestion et ne peuvent être ajoutées à des installations existantes. L'invention vise donc à apporter des solutions aux problèmes précités.

Le but de l'invention est de fournir une installation remédiant aux inconvénients mentionnés et améliorant les installations connues de l'art antérieur. En particulier, l'invention propose une installation permettant une gestion simple, économique et évolutive.

Le terme d'actionneur utilisé dans cette demande comprend notamment la partie électronique ou électromécanique permettant le contrôle du mouvement de l'élément mobile ou le contrôle d'état d'une charge, par exemple d'une lampe, mais également les moyens électroniques de dialogue avec les différents autres équipements de l'installation, notamment les dispositifs d'émission et de réception de trames de communication échangées entre les différents composants de l'installation selon des moyens connus.

Le terme d'équipements électriques du bâtiment utilisé dans cette demande comprend les actionneurs tels que définis précédemment, ainsi que des éléments d'interface et de commande de groupe d'actionneurs, et tout dispositif disposant des moyens de dialogue avec d'autres dispositifs ou avec d'autres équipements donneurs d'ordres dans le réseau.

Selon l'invention, une installation contrôle de manière automatique des conditions de confort et/ou de sécurité dans un bâtiment. L'installation comprend au moins un équipement électrique du bâtiment, une unité centrale de commande destinée à transmettre de manière automatique des messages à l'au moins un équipement électrique par l'intermédiaire d'un premier média de communication. Elle est caractérisée en ce qu'elle comprend en outre un élément de contrôle multicanaux destiné à transmettre de manière automatique des messages à l'au moins un équipement électrique par l'intermédiaire d'un second média de communication.

L'élément de contrôle multicanaux peut comprendre des éléments de connexion à un serveur distant destiné à lui transmettre des informations relatives au fonctionnement de l'élément de contrôle multicanaux et/ou au fonctionnement de l'au moins un équipement électrique.

Le serveur distant peut envoyer les informations relatives au fonctionnement l'élément de contrôle multicanaux et/ou au fonctionnement de l'au moins un équipement électrique de manière automatique, selon un scenario prédéfini et/ou selon des informations reçues depuis un ou plusieurs capteurs.

Le serveur distant peut comprendre une interface homme-machine et envoyer les informations relatives au fonctionnement de l'élément de contrôle multicanaux et/ou au fonctionnement de l'au moins un équipement électrique de manière interactive avec un utilisateur, en exécutant une application utilisant l'interface homme-machine.

Le serveur distant peut être en lien avec l'unité centrale de commande.

L'installation peut comprendre en outre un ou plusieurs capteurs, tels que des capteurs de présence ou de luminosité ou de température.

L'élément de contrôle multicanaux et l'unité centrale peuvent comporter des parties communes, notamment des capteurs et/ou des éléments de calcul et/ou des éléments d'interface homme-machine.

Le premier média de communication peut être un média de communication filaire monodirectionnel.

Le deuxième média de communication peut être un média de communication radio monodirectionnel.

L'élément de contrôle multicanaux peut être destiné à transmettre des messages aux équipements électriques individuellement ou par groupe.

L'installation peut comprendre des unités de commande locales destinées à transmettre des messages à l'au moins un équipement électrique individuellement ou par groupe, par l'intermédiaire d'un troisième média de communication.

L'au moins un équipement électrique peut comprendre des moyens de réception des messages en provenance des unités de commande locales, transitant sur un troisième média de communication.

L'installation peut comprendre une pluralité d'éléments de contrôle multicanaux connectés en réseau.

L'installation peut comprendre au moins un dispositif d'analyse comprenant un élément de réception apte à recevoir les messages transitant sur le deuxième média de communication à destination de l'au moins un équipement électrique et un élément de transmission apte à transmettre à l'élément de contrôle multicanaux des informations relatives à la réception par le dispositif d'analyse des messages à destination de l'au moins un équipement électrique.

L'invention sera mieux comprise à la lecture de la description qui va suivre, donnée uniquement à titre d'exemple et faite en se référant aux dessins annexés sur lesquels :

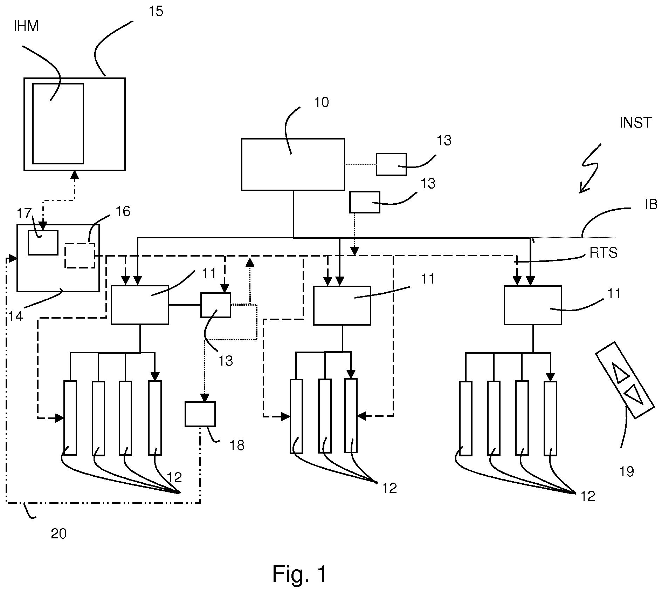

La figure 1 représente une installation immotique INST selon l'invention.

Les éléments mobiles sont chacun pilotés par un actionneur 12, ce dernier permettant le mouvement automatisé de l'élément mobile. Les actionneurs sont généralement masqués dans des rails ou des caissons lorsqu'ils sont installés et sont alors difficilement accessibles par l'intérieur ou l'extérieur du bâtiment.

L'automatisation de l'installation du bâtiment, notamment des éléments mobiles via leurs actionneurs 12, basée sur la présence d'une unité de commande centrale 10, des éléments d'interface et de commande locaux 11 et des capteurs divers 13 (présence, luminosité, température, etc), permet de gérer notamment la sécurité, le confort et la thermique dans le bâtiment. Pour cela, les différents équipements installés dans le réseau (actionneurs, éléments de commande, capteurs) communiquent entre eux par le biais d'un premier média de communication sans fil (radio notamment) ou filaire (bus câblés, courants porteurs). Ce premier média de communication IB est représenté en trait continu sur la figure 1.

En s'appuyant sur ce premier média de communication IB, l'unité centrale de commande 10 et les équipements électriques précédemment énumérés 11, 12, 13, forment un premier réseau NTW1. La configuration de ce premier réseau est effectuée habituellement à la mise en service de l'installation, par câblage et/ou par programmation. A travers ce premier réseau l'unité de commande 10 reçoit des informations des différents capteurs 13, et envoie des ordres à un ou plusieurs éléments d'interface et commande locaux 11, dans le but de piloter les actionneurs 12.

Les éléments d'interface et de commande locaux 11 peuvent être groupés pour créer des zones de gestion unitaire dans le bâtiment, mais si une reconfiguration des zones est nécessaire, cela implique un changement du câblage et/ou de la programmation au moins de l'unité de commande 10, et éventuellement des équipements électriques 11, 12. Ces opérations nécessitent une intervention sur le site où l'installation fonctionne, ce qui entraîne un coût important et une perturbation du fonctionnement de l'installation.

L'installation selon l'invention comprend aussi un élément de contrôle multicanaux 14, c'est-à-dire un élément de contrôle permettant de piloter ou commander ou gérer plusieurs équipements électriques. L'élément de contrôle multicanaux 14 est destiné à transmettre de manière automatique des messages à un ou plusieurs équipements électriques 11, 12. Cet élément de contrôle multicanaux 14 comprend des éléments de transmission d'informations 16, lui permettant d'être en lien par l'intermédiaire d'un deuxième média de communication RTS avec les équipements électriques 11, 12, 13. Ce deuxième média de communication RTS est représenté en trait pointillé sur la figure 1.

En s'appuyant sur ce deuxième média de communication RTS, l'élément de contrôle multicanaux 14 et les équipements électriques précédemment énumérés 11, 12, 13, forment un deuxième réseau NTW2.

L'élément de contrôle multicanaux 14 comprend également des éléments de connexion 17, par exemple par une liaison Internet, lui permettant d'être en lien avec un serveur de configuration 15. Le serveur de configuration 15 comprend des moyens informatiques, notamment une interface IHM (écran et moyens d'interaction avec celui-ci, par exemple un clavier, une souris et/ou un panneau tactile), des moyens de calcul, comme une unité logique de traitement, et des moyens de réception et de transmission d'informations, par exemple par une liaison Internet. Le serveur de configuration 15 peut être un ordinateur, notamment de type PC, un assistant numérique ou un outil spécifiquement dédié à la configuration d'une telle installation immotique.

L'installation INST pour le contrôle automatisé des conditions de confort ou de sécurité dans un bâtiment comprend donc un ou plusieurs équipements électriques 11, 12, 13, une unité centrale de commande 10, destinée à transmettre de manière automatique, c'est à dire sans l'intervention de l'utilisateur, des messages aux équipements électriques 11, 12, 13 par l'intermédiaire du premier média de communication IB, et un élément de contrôle multicanaux 14 destiné à transmettre de manière automatique des messages à au moins une partie des équipements électriques 11, 12 par l'intermédiaire d'un second média de communication RTS.

L'élément de contrôle multicanaux 14 comprend des éléments de connexion 17 lui permettant d'être en lien par l'intermédiaire d'un autre média de communication, par exemple de type Internet, avec un serveur distant 15, destiné à lui transmettre des informations relatives au fonctionnement de l'élément de contrôle 14 et/ou au fonctionnement des équipements électriques 11, 12, 13.

Ainsi, une installation INST selon l'invention permet l'évolution de la gestion automatique des actionneurs. Les nouvelles fonctionnalités peuvent être ajoutées par le serveur distant 15 via un ou plusieurs éléments de contrôle multicanaux 14, utilisant le deuxième réseau NTW2, ce qui évite la reconfiguration du premier réseau NTW1. Ainsi, il n'est pas nécessaire d'effectuer une reconfiguration matérielle et/ou logicielle de l'unité centrale de commande 10 et des équipements électriques 11, 12, 13. Avantageusement, l'installation INST continue de mettre en œuvre toutes ses fonctionnalités initiales s'appuyant sur le premier réseau NTW1, et peut en rajouter d'autres grâce au deuxième réseau NTW2.

De plus, contrairement aux pratiques courantes de mise à jour du logiciel de l'unité centrale de commande 10 en charge de la gestion des actionneurs 12, qui entraînerait l'immobilisation de l'installation immotique pour mise à jour et tests sur le site, éventuellement une reconfiguration de premier réseau NTW1 utilisant le premier média de communication IB, l'invention propose l'ajout d'un nouvel élément de contrôle multicanaux 14 qui, s'appuyant sur le deuxième média de communication RTS, forme avec les équipements électriques 11, 12, 13, le deuxième réseau NTW2, et ceci sans intervenir sur l'unité centrale de commande 10 ou sur les actionneurs 12 sur le site. Les actionneurs 12 recevront donc, pour une même application, des commandes et informations générées de manière automatique en provenance des deux sources, l'unité centrale de commande 10 et l'élément de contrôle multicanaux 14.

L'installation INST peut ainsi recevoir depuis le serveur distant 15 des informations relatives au fonctionnement de l'élément de contrôle multicanaux 14 et/ou au fonctionnement des équipements électriques 11, 12, 13 de manière automatique, selon un scenario prédéfini et/ou selon des informations reçues depuis des capteurs 13, indépendamment du fonctionnement de l'unité centrale de commande 10.

L'envoi automatique des commandes permet la génération et l'utilisation des scénarii à distance, sans modifier la configuration de l'installation et sans accéder aux éléments sur le site.

Les actionneurs 12 exécutant ces scénarii peuvent prendre en compte des informations fournies par différents capteurs 13 positionnés à l'intérieur et à l'extérieur du bâtiment (capteurs de présence, de température, de luminosité), y compris les capteurs du premier réseau NTW1. Ces capteurs 13 peuvent délivrer des informations soit directement aux actionneurs 12, soit aux éléments d'interface et de commande 11, soit à l'unité centrale de commande 10, ou à l'élément de contrôle multicanaux 14.

Dans un mode de réalisation, le serveur distant 15 comprend une interface homme-machine IHM et envoie des informations et des commandes relatives au fonctionnement de l'installation INST de manière interactive avec un utilisateur, en exécutant une application utilisant l'interface homme-machine IHM, permettant ainsi le pilotage à distance de tout ou partie des équipements électriques 11, 12 du bâtiment par un utilisateur ou gestionnaire du bâtiment.

Selon un autre mode de réalisation, le serveur distant 15 est également en lien avec l'unité centrale de commande 10.

Dans un autre mode de réalisation, les informations issues des capteurs 13 peuvent être fournies au serveur distant 15 via un réseau de type Internet, permettant ainsi l'optimisation des scénarii en fonction de conditions locales, ainsi que la mutualisation des ressources, et ce sans intervention sur le site.

De cette manière, des nouvelles fonctionnalités peuvent être rajoutées, par une mise à jour des commandes, des paramètres et/ou des modules logiciels qui ne nécessitent pas une modification des configurations matérielles existantes, comme l'adressage et l'accès physique des équipements électriques 11, 12, au premier média de communication IB.

Il est à noter que l'élément de contrôle multicanaux 14 est préférentiellement distinct de l'unité centrale 10, mais ils peuvent comporter des parties communes.

Dans un mode de réalisation préféré, le premier média de communication IB est un média de communication filaire monodirectionnel. C'est le cas des nombreux réseaux existants, auxquels l'invention apporte une possibilité d'évolution simple et économique. En effet, la solution d'utiliser une deuxième source de messages à l'attention des actionneurs, permet à la fois le fonctionnement sans reconfiguration matérielle et/ou logicielle de l'unité de commande 10 utilisant le premier média de communication IB et l'évolution des fonctionnalités des actionneurs 12.

Le deuxième média de communication RTS peut être un média de communication radio monodirectionnel. L'ajout d'un deuxième réseau NTW2, véhiculant des messages radio via le deuxième média de communication RTS, au premier réseau NTW1 utilisant le premier média de communication IB, permet d'ajouter des fonctionnalités à l'installation INST sans changer la configuration câblée des installations existantes, opération coûteuse et pas toujours faisable.

Selon un mode de réalisation, l'élément de contrôle multicanaux 14 est destiné à transmettre des messages aux équipements électriques 11, 12, 13 individuellement ou par groupe. En effet, le boîtier de contrôle ayant des capacités d'adressage, la gestion des actionneurs est plus souple et plus précise, en fonction des conditions locales spécifiques à un actionneur ou à un groupe d'actionneurs, par exemple des actionneurs pilotant un groupe de stores ayant une même exposition solaire, ou des actionneurs situés dans des bureaux ayant les mêmes horaires et pouvant utiliser les mêmes scénarii.

Il est à noter que la gestion des groupes dans le premier réseau NTW1 peut être différente de la gestion des groupes dans le deuxième réseau NTW2.

L'installation INST peut comprendre en outre des unités de commande locales 19 destinées à transmettre des messages aux équipements électriques 11, 12, 13 individuellement ou par groupe, par l'intermédiaire d'un troisième média de communication sans fil RTS1. Dans ce cas, les équipements électriques 11, 12, 13 comprennent des moyens de réception aptes à recevoir les messages par l'intermédiaire du troisième média de communication sans fil RTS1.

Dans un mode de réalisation préféré, le deuxième média de communication RTS est identique au troisième média de communication sans fil RTS1. De cette manière le deuxième réseau NTW2 peut être constitué par le simple ajout d'un ou plusieurs éléments de contrôle multicanaux 14, les équipements électriques 11, 12, 13 étant aptes à recevoir des messages par l'intermédiaire du troisième média de communication RTS1.

Dans un mode de réalisation préféré, l'installation INST comprend une pluralité d'éléments de contrôle multicanaux 14 connectés en réseau. Une telle configuration permet de distribuer de manière avantageuse la charge de calcul et de gestion des communications entre plusieurs éléments de contrôle multicanaux. Le fonctionnement et la mise à jour de la gestion d'un sous-groupe d'actionneurs, gérés par un élément de contrôle multicanaux 14, sont ainsi indépendants des autres sous-groupes. Cette caractéristique est particulièrement avantageuse dans le cas des bâtiments industriels et tertiaires, car elle permet de réorganiser les surfaces et les équipements électriques gérant ces surfaces de manière simple et indépendante.

Dans un mode de réalisation préféré l'installation utilisant un deuxième média de communication RTS radio monodirectionnel comprend en outre un dispositif d'analyse 18.

Ce dispositif d'analyse 18 comprend un élément de réception apte à recevoir les messages transitant sur le deuxième média de communication RTS à destination d'au moins une partie des équipements électriques 11, 12, 13 ainsi qu'un élément de transmission apte à transmettre à l'élément de contrôle multicanaux 14 des informations relatives à la réception par le dispositif d'analyse 18 des messages à destination d'au moins une partie des équipements électriques 11, 12, 13.

Il est à noter que l'élément de transmission du dispositif d'analyse 18, utilisé pour la transmission des comptes-rendus de réception vers l'élément de contrôle multicanaux 14, peut utiliser un quatrième média de communication 20 distinct des médias de communications IB, RTS et RTS1 déjà mentionnés.

Dans le cas des réseaux radio monodirectionnels, le dispositif d'analyse 18 constitue une voie de retour vers l'élément de contrôle multicanaux 14, permettant à ce dernier d'estimer si l'émission des messages a eu lieu dans des bonnes conditions, ou au contraire, une réémission est nécessaire.

En effet, le dispositif d'analyse 18 muni d'un élément de réception adapté au deuxième média de communication RTS, placé dans des conditions de réception similaires aux conditions de réception des équipements électriques 11, 12, 13 destinataires des messages émis par l'élément de contrôle multicanaux 14, subira les mêmes éventuelles perturbations. La vérification de l'intégrité des messages reçus, par des techniques connues de l'homme du métier, telles que les codes détecteurs d'erreurs, permet au dispositif d'analyse 18 de déterminer avec une probabilité élevée si le message respectif à été bien reçu par le ou les équipement(s) électriques 11, 12, 13 destinataires de ces messages. Ensuite le dispositif d'analyse 18 envoie le résultat de cette estimation vers l'élément de contrôle multicanaux 14 utilisant le quatrième média de communication 20.

Il est à noter que selon les modes de réalisation, le quatrième média de communication 20 peut être différent ou identique au deuxième média de communication RTS utilisé pour la transmission des messages par l'élément de contrôle multicanaux 14.

Si les équipements électriques 11, 12 destinataires des messages envoyés, sont équipés des récepteurs radio monodirectionnels ne permettant pas l'émission des messages de confirmation de bonne réception, l'envoi de l'estimation des conditions de réception par le dispositif d'analyse 18 permet à l'élément de contrôle multicanaux 14 de déterminer si une réémission est nécessaire ou pas.

De cette manière, l'installation INST bénéficie d'une nouvelle fonctionnalité, permettant un retour d'information sur l'émission effectuée par l'élément de contrôle multicanaux 14 à destination des équipements électriques 11, 12, monodirectionnels.

Grâce à la réception des messages contenant des estimations de conditions de réception, l'élément de contrôle multicanaux 14 peut déterminer si une répétition des messages est nécessaire ou non, et assurer ainsi un fonctionnement automatique fiable.

Il est à noter que, contrairement à un cas d'envoi des messages avec une unité de commande locale, par un utilisateur qui peut constater l'exécution des ordres envoyés, dans le cas d'un fonctionnement automatique (sans intervention de l'utilisateur) de l'élément de contrôle multicanaux 14, le retour d'informations sur l'émission est nécessaire, pour éviter la retransmission inutile, voire contradictoire, des messages correctement reçus, ou la perte des messages.

## Revendications

1. Installation (INST) contrôlant de manière automatique des conditions de confort et/ou de sécurité dans un bâtiment comprenant au moins un équipement électrique (11, 12) du bâtiment du type actionneur électrique d'entraînement d'un élément mobile de fermeture ou de protection solaire ou de type actionneur électrique de pilotage d'un équipement d'éclairage, de chauffage ou de ventilation, une unité centrale de commande (10) destinée à transmettre de manière automatique des messages à l'au moins un équipement électrique (11, 12) par l'intermédiaire d'un premier média de communication (IB) filaire monodirectionnel, l'installation comprenant en outre :
- un élément de contrôle multicanaux (14) destiné à transmettre de manière automatique des messages à l'au moins un équipement électrique (11, 12) par l'intermédiaire d'un second média de communication (RTS) radio monodirectionnel,
- au moins un dispositif d'analyse (18),
l'unité centrale de commande (10) et l'au moins un équipement électrique (11, 12) formant un premier réseau (NTW1),
l'élément de contrôle multicanaux (14) et l'au moins un équipement électrique (11, 12) formant un deuxième réseau (NTW2),
l'élément de contrôle multicanaux (14) étant distinct de l'unité centrale (10),
le dispositif d'analyse (18) comprenant :
- un élément de réception apte à recevoir les messages transitant sur le deuxième média de communication (RTS) à destination de l'au moins un équipement électrique (11, 12), et
- un élément de transmission apte à transmettre à l'élément de contrôle multicanaux (14) des informations relatives à la réception par le dispositif d'analyse (18) des messages à destination de l'au moins un équipement électrique (11, 12).

2. Installation (INST) selon la revendication 1, **caractérisée en ce que** l'élément de contrôle multicanaux (14) comprend des éléments de connexion (17) à un serveur distant (15) destiné à lui transmettre des informations relatives au fonctionnement de l'élément de contrôle multicanaux (14) et/ou au fonctionnement de l'au moins un équipement électrique (11, 12).

3. Installation (INST) selon la revendication précédente, **caractérisée en ce que** le serveur distant envoie les informations relatives au fonctionnement l'élément de contrôle multicanaux (14) et/ou au fonctionnement de l'au moins un équipement électrique (11, 12) de manière automatique, selon un scenario prédéfini et/ou selon des informations reçues depuis un ou plusieurs capteurs (13).

4. Installation (INST) selon l'une des revendications 2 et 3, **caractérisée en ce que** le serveur distant (15) comprend une interface homme-machine (IHM) et envoie les informations relatives au fonctionnement de l'élément de contrôle multicanaux (14) et/ou au fonctionnement de l'au moins un équipement électrique (11, 12, 13) de manière interactive avec un utilisateur, en exécutant une application utilisant l'interface homme-machine (IHM).

5. Installation (INST) selon l'une des revendications 2 à 4, **caractérisée en ce que** le serveur distant (15) est en lien avec l'unité centrale de commande (10).

6. Installation (INST) selon l'une des revendications précédentes, **caractérisée en ce qu'**elle comprend en outre un ou plusieurs capteurs (13), tels que des capteurs de présence ou de luminosité ou de température.

7. Installation (INST) selon l'une des revendications précédentes, **caractérisée en ce que** l'élément de contrôle multicanaux (14) et l'unité centrale (10) comportent des parties communes, notamment des capteurs et/ou des éléments de calcul et/ou des éléments d'interface homme-machine.

8. Installation (INST) selon l'une des revendications précédentes, **caractérisée en ce que** l'élément de contrôle multicanaux (14) est destiné à transmettre des messages aux équipements électriques (11, 12) individuellement ou par groupe.

9. Installation (INST) selon l'une des revendications précédentes, **caractérisée en ce qu'**elle comprend des unités de commande locales (19) destinées à transmettre des messages à l'au moins un équipement électrique (11, 12) individuellement ou par groupe, par l'intermédiaire d'un troisième média de communication (RTS1).

10. Installation selon l'une des revendications précédentes, **caractérisée en ce que** l'au moins un équipement électrique (11, 12) comprend des moyens de réception des messages en provenance des unités de commande locales (19), transitant sur un troisième média de communication (RTS1).

11. Installation (INST) selon l'une des revendications précédentes, **caractérisée en ce qu'**elle comprend une pluralité d'éléments de contrôle multicanaux (14) connectés en réseau.

## Patentansprüche

1. Anlage (INST) zur automatischen Steuerung der Komfort- und/oder Sicherheitsbedingungen in einem Gebäude, die mindestens eine elektrische Gebäudeausrüstung (11, 12) des Typs elektrisches Stellglied zum Antrieb eines beweglichen Schließ- oder Sonnenschutzelements oder des Typs elektrisches Stellglied zum Steuern einer Beleuchtungs-, Heizungs- oder Belüftungsausrüstung sowie eine zentrale Steuereinheit (10) zur automatischen Übertragung von Nachrichten an mindestens eine elektrische Gebäudeausrüstung (11, 12) über ein erstes monodirektionales verdrahtetes Kommunikationsmedium (IB) aufweist, wobei die Anlage darüber hinaus Folgendes aufweist:
- ein Mehrkanal-Steuerelement (14) zur automatischen Übertragung von Nachrichten an mindestens eine elektrische Gebäudeausrüstung (11, 12) über ein zweites monodirektionales Funk-Kommunikationsmedium (RTS),
- mindestens eine Analysevorrichtung (18),
wobei die zentrale Steuereinheit (10) und die mindestens eine elektrische Gebäudeausrüstung (11, 12) ein erstes Netzwerk (NTW1) bilden,
wobei das Mehrkanal-Steuerelement (14) und die mindestens eine elektrische Gebäudeausrüstung (11, 12) ein zweites Netzwerk (NTW2) bilden,
wobei sich das Mehrkanal-Steuerelement (14) von der zentralen Steuereinheit (10) unterscheidet,
wobei die Analysevorrichtung (18) Folgendes aufweist:
- ein Empfangselement, das geeignet ist, die Nachrichten zu empfangen, die das zweite Kommunikationsmedium (RTS) in Richtung der mindestens einen elektrischen Gebäudeausrüstung (11, 12) durchlaufen, und
- ein Übertragungselement, das geeignet ist, an das Mehrkanal-Steuerelement (14) Informationen zu übertragen, die sich auf den Empfang der Nachrichten in Richtung der mindestens einen elektrischen Gebäudeausrüstung (11, 12), durch die Analysevorrichtung (18) beziehen.

2. Installation (INST) nach Anspruch 1, **dadurch gekennzeichnet, dass** das Mehrkanal-Steuerelement (14) Verbindungselemente (17) zu einem entfernten Server (15) aufweist, der ihm Informationen bezüglich des Betriebs des Mehrkanal-Steuerelements (14) und/oder des Betriebs der mindestens einen elektrischen Gebäudeausrüstung (11, 12) übertragen soll.

3. Anlage (INST) nach dem vorhergehenden Anspruch, **dadurch gekennzeichnet, dass** der entfernte Server die Informationen bezüglich des Betriebs des Mehrkanal-Steuerelements (14) und/oder des Betriebs der mindestens einen elektrischen Gebäudeausrüstung (11, 12) automatisch gemäß einem vordefinierten Szenario und/oder gemäß Informationen, die von einem oder mehreren Sensoren (13) empfangen werden, sendet.

4. Anlage (INST) nach einem der Ansprüche 2 und 3, **dadurch gekennzeichnet, dass** der entfernte Server (15) eine Mensch-Maschine-Schnittstelle (IHM) aufweist und die Informationen bezüglich des Betriebs des Mehrkanal-Steuerelements (14) und/oder des Betriebs der mindestens einen elektrischen Gebäudeausrüstung (11, 12, 13) auf interaktive Weise mit einem Benutzer sendet, indem eine Anwendung unter Verwendung der Mensch-Maschine-Schnittstelle (IHM) ausgeführt wird.

5. Anlage (INST) nach einem der Ansprüche 2 bis 4, **dadurch gekennzeichnet, dass** der entfernte Server (15) mit der zentralen Steuereinheit (10) verbunden ist.

6. Anlage (INST) nach einem der vorhergehenden Ansprüche, **dadurch gekennzeichnet, dass** sie darüber hinaus einen oder mehrere Sensoren (13) aufweist, wie beispielsweise Anwesenheits- oder Helligkeits- oder Temperatursensoren.

7. Anlage (INST) nach einem der vorhergehenden Ansprüche, **dadurch gekennzeichnet, dass** das Mehrkanal-Steuerelement (14) und die zentrale Steuereinheit (10) gemeinsame Teile aufweisen, insbesondere Sensoren und/oder Berechnungselemente und/oder Mensch-Maschine-Schnittstellenelemente.

8. Anlage (INST) nach einem der vorhergehenden Ansprüche, **dadurch gekennzeichnet, dass** das Mehrkanal-Steuerelement (14) dazu dient, Nachrichten einzeln oder in Gruppen an die elektrischen Gebäudeausrüstungen (11, 12) zu übertragen.

9. Anlage (INST) nach einem der vorhergehenden Ansprüche, **dadurch gekennzeichnet, dass** sie lokale Steuereinheiten (19) aufweist, die dazu dienen, Nachrichten einzeln oder in Gruppen an mindestens eine elektrische Gebäudeausrüstung (11, 12) über ein drittes Kommunikationsmedium (RTS1) zu übertragen.

10. Anlage nach einem der vorhergehenden Ansprüche, **dadurch gekennzeichnet, dass** die mindestens eine elektrische Gebäudeausrüstung (11, 12) Mittel zum Empfangen der Nachrichten von den lokalen Steuereinheiten (19) aufweist, die ein drittes Kommunikationsmedium (RTS1) durchlaufen.

11. Anlage (INST) nach einem der vorhergehenden Ansprüche, **dadurch gekennzeichnet, dass** sie eine Vielzahl von Mehrkanal-Steuerelementen (14) aufweist, die in einem Netzwerk verbunden sind.

## Claims

1. Installation (INST) automatically controlling comfort and/or security in a building comprising at least one electrical device (11, 12) of the building of electric actuator type driving a movable closing or sun-protection element or of electric actuator type for controlling a lighting, heating or ventilation device, a central control unit (10) intended to automatically transmit messages to the at least one electrical device (11, 12) via a first unidirectional wired communication medium (IB), the installation further comprising:
- a multichannel control element (14) intended to automatically transmit messages to the at least one electrical device (11, 12) via a second unidirectional wired communication medium (RTS);
- at least one analysis device (18),
the central control unit (10) and the at least one electrical device (11, 12) forming a first network (NTW1),
the multichannel control element (14) and the at least one electrical device (11, 12) forming a second network (NTW2),
the multichannel control element (14) being distinct from the central control unit (10),
the analysis device (18) comprising:
- a receiver element capable of receiving messages passing over the second communication medium (RTS) destined for the at least one electrical device (11, 12); and
- a transmitter element capable of transmitting, to the multichannel control element (14), information relating to the reception, by the analysis device (18), of the messages destined for the at least one electrical device (11, 12).

2. Installation (INST) according to Claim 1, **characterized in that** the multichannel control element (14) comprises elements (17) for connection to a remote server (15) intended to transmit thereto information relating to the operation of the multichannel control element (14) and/or to the operation of the at least one electrical device (11, 12) .

3. Installation (INST) according to the preceding claim, **characterized in that** the remote server sends the information relating to the operation of the multichannel control element (14) and/or to the operation of the at least one electrical device (11, 12) automatically, according to a predefined scenario and/or according to information received from one or more sensors (13).

4. Installation (INST) according to either of Claims 2 and 3, **characterized in that** the remote server (15) comprises a human-machine interface (IHM) and sends the information relating to the operation of the multichannel control element (14) and/or to the operation of the at least one electrical device (11, 12, 13) interactively with a user, by running an application using the human-machine interface (IHM).

5. Installation (INST) according to one of Claims 2 to 4, **characterized in that** the remote server (15) is linked to the central control unit (10).

6. Installation (INST) according to one of the preceding claims, **characterized in that** it further comprises one or more sensors (13), such as presence, luminosity or temperature sensors.

7. Installation (INST) according to one of the preceding claims, **characterized in that** the multichannel control element (14) and the central unit (10) have portions in common, in particular sensors and/or computing elements and/or human-machine interface elements.

8. Installation (INST) according to one of the preceding claims, **characterized in that** the multichannel control element (14) is intended to transmit messages to the electrical devices (11, 12) individually or per group.

9. Installation (INST) according to one of the preceding claims, **characterized in that** it comprises local control units (19) intended to transmit messages to the at least one electrical device (11, 12) individually or per group, via a third communication medium (RTS1).

10. Installation (INST) according to one of the preceding claims, **characterized in that** the at least one electrical device (11, 12) comprises means for receiving the messages from the local control units (19), passing over a third communication medium (RTS1).

11. Installation (INST) according to one of the preceding claims, **characterized in that** it comprises a plurality of networked multichannel control elements (14).
